# EUROPÄISCHE PATENTSCHRIFT

(11) **EP 1 055 148 B1**
(45) Veröffentlichungstag und Bekanntmachung des Hinweises auf die Patenterteilung: **27.08.2003**
(21) Anmeldenummer: 99910143.9
(22) Anmeldetag: 18.02.1999
(51) Int. Cl.: G02F 1/1335, H01J 37/302

(54) **OPTISCHER SCHALTER**
OPTICAL SWITCH
COMMUTATEUR OPTIQUE

(30) Priorität: 20.02.1998 DE 19807121
(43) Veröffentlichungstag der Anmeldung: 29.11.2000
(73) Patentinhaber: F.O.B. GMBH Gesellschaft zur Fertigung Farbiger Optoelektronischer Bauelemente, 06184 Grobers (DE)
(72) Erfinder: DROST, Wolf-Gernot, D-06124 Halle (DE); BERNDT, Klaus, D-06128 Halle (DE); BERGER, Andreas, D-06114 Halle (DE)
(74) Vertreter: Voigt, Wolf-Rüdiger
(86) Internationale Anmeldenummer: DE9900454
(87) Internationale Veröffentlichungsnummer: WO99042896

(56) Entgegenhaltungen:
- EP-A- 0 762 181
- WO-A-94/20879
- DE-A- 19 642 116
- US-A- 5 625 427
- PATENT ABSTRACTS OF JAPAN vol. 016, no. 131 (P-1332), 3. April 1992 (1992-04-03) & JP 03 294802 A (ALPS ELECTRIC CO LTD), 26. Dezember 1991 (1991-12-26) -& JP 03 294802 A

## Beschreibung

Die Erfindung betrifft, allgemein ausgedrückt, einen optischen Schalter, welcher im besonderen ein hochauflösendes Farbdisplay darstellen kann. Der optische Schalter mit seinen Farb- und Polarisationswirkungen ist nicht auf den sichtbaren Spektralbereich begrenzt. Es besteht auch die Möglichkeit zur Lichtsteuerung im UV- und IR-Bereich sowie zu Kombinationen mit Anwendungen im sichtbaren Spektralbereich.

Flüssigkristallanzeigen (Liquid Crystal Displays, LCD) gehören seit längerer Zeit zum Stande der Technik. Sie zeichnen sich durch einen geringen Leistungsbedarf und robuste Bauweise aus. Für Gebrauchsgegenstände werden im großen Stil Flüssigkristallanzeigen eingesetzt, die auf dem Prinzip beruhen, daß eine verdrillte Flüssigkristallschicht die Polarisationsebene von Licht unterschiedlich stark dreht, je nachdem, ob ein elektrisches Feld angelegt ist oder nicht. Das Licht kann dann ein zweites Polarisationsfilter in einem Fall passieren und im anderen Fall nicht.

Ein derartiges Bauelement besteht aus zwei Glasplatten, den Trägerplatten, zwischen denen sich die Flüssigkristallsubstanz befindet. Beide Glasplatten tragen an der Innenseite leitfähige durchsichtige Elektroden und Orientierungsschichten. Die Flüssigkristallmoleküle sind im feldlosen Zustand parallel zu den Glasplatten orientiert. Auf der Innenseite tragen beide Glasplatten mikrofeine Strukturierungen, die zueinander verdreht sind (in der Regel um 90° oder 270°). Da sich die Flüssigkristallmoleküle an den Strukturierungen der Orientierungsschicht ausrichten, findet in der Flüssigkristallschicht eine Verdrehung der Moleküle zueinander statt. Das Anlegen einer elektrischen Spannung zwischen gegenüberliegenden Elektroden bewirkt eine Ausrichtung der Moleküle in Feldrichtung; die Polarisationsrichtung eines durchdringenden Lichtstrahls wird nicht mehr gedreht.

Üblicherweise gehören zum Aufbau einer Flüssigkristallanzeige neben weiteren Komponenten zwei Polarisationsfilter, die jeweils an den äußeren Flächen der Trägerplatten angeordnet sind, und für Farb-LCDs zusätzliche Farbfilter. Die aus vielen Schichten bestehenden konventionellen LCDs sind recht kompliziert aufgebaut. Die Farbfilter sind empfindlich gegen höhere Temperaturen, da diese häufig aus organischem Polymermaterial bestehen. Die Lichtausbeuten in den konventionellen Farb-LCDs sind i.a. relativ gering.
Gemäß DE 42 01 281 A1 wird ein Vorschlag zur Ausbildung von Substratplatten für Flüssigkristallanzeigen, die zur farbigen Wiedergabe von Abbildungen geeignet sind, unterbreitet. In dieser Veröffentlichung wird ausgeführt, daß es üblich ist, bei Substratplatten für Flüssigkristallanzeigen, deren Ansteuerung mittels einer Punkt-Matrix-Elektrodenstruktur erfolgt und die farbige Abbildungen erlauben, die Farbpixel der verschiedenen Grundfarben direkt auf einer Trägerplatte auszubilden. Da die Farbpixel jedoch keine ebenen Oberflächenkonturen ausbilden, werden sie mit einer Abdeckschicht versehen. Eine Weiterentwicklung in dieser Richtung soll gemäß DE 42 01 281 A1 erreicht werden, indem die aus Farbpixeln gebildete Farbfilterschicht mit einer ultradünnen Folie oder Glasschicht überdeckt wird. Diese Maßnahme wird für erforderlich gehalten, wenn Substratplatten in Displays verwendet werden, die Verdrehwinkel zwischen den Flüssigkristallmolekülen von ≥ 90° aufweisen bzw. nur einen geringen Abstand zwischen den Zellenplatten zulassen. Bedingt durch die nunmehr mit Hilfe der Abdeckung erzielte ebene Oberfläche soll ein einheitliches Schaltverhalten der Flüssigkristallmoleküle erreicht werden. Dieses Beispiel zum Stande der Technik zeigt, welche Anstrengungen erforderlich sind, um hochwertige farbige Displays herzustellen.

**Entsprechend der WO 94/20879 wird ein Flüssigkristall-Display vorgeschlagen, welches aus 2 Trägerplatten aufgebaut ist, die aus Glas bestehen. Zwischen den Trägerplatten befindet sich eine Flüssigkristallsubstanz. Die Trägerplatten sind mit durchsichtigen Elektroden versehen und an den äußeren Seiten der Trägerplatten sind Polarisatoren platziert.**
**Mindestens auf einer der Trägerplatten sind farbstrukturierte dichroitische Filter angeordnet, die im Sinne von Farbfilterschichten innerhalb einer Matrix liegen und von der oder den Trägerplatten getragen werden.**

Nunmehr sei auf eine DE-Patentanmeldung mit dem Aktenzeichen 196 42 116.0 verwiesen: Diese Patentanmeldung mit dem Titel "Verfahren zur strukturierten Energieübertragung mit Elektronenstrahlen" betrifft ein Verfahren, wonach auf vorzugsweise ebene Oberflächen von Objekten - wie Platten oder Bänder aus metallischen, halbleitenden oder dielektrischen Werkstoffen oder deren Kombination - kurzzeitig in begrenzte Oberflächenelemente Energie mit dem Elektronenstrahl übertragen wird. Die nutzbaren Bearbeitungseffekte werden durch die physikalische oder chemische Reaktion der Werkstoffe auf die Energieübertragung mit dem Elektronenstrahl bestimmt. Das bevorzugte Anwendungsgebiet ist die Strukturierung von Oberflächen auf beliebig langen streifenförmigen Objekten mit einer begrenzten Anzahl sich wiederholender, in Spalten und Zeilen matrixartig angeordneter Strukturelemente.
Das erfindungswesentliche Merkmal der vorher genannten Patentanmeldung besteht darin, daß das zu bearbeitende Objekt während der Energieübertragung unter einer Maske berührungsfrei zu dieser ***so*** bewegt wird, daß ein Elektronenstrahl in der Bewegungsrichtung des Objektes hochfrequent oszillierend etwa senkrecht zur Bewegungsrichtung des Objektes über die in der Maske befindlichen Aussparungen mit einer gegenüber der Objektbewegung sehr hohen Geschwindigkeit über die Maske gefühlt wird.

Ein vorteilhafter Anwendungsbereich ist die hochproduktive strukturierte Bearbeitung relativ großflächiger Objekte. Im Bereich der thermischen Elektronenstrahlbearbeitung kann das Verfahren u.a. zur farblichen Strukturierung geeignet sensibilisierter Glasoberflächen eingesetzt werden. Beispielsweise kann so ein Substrat aus Glas mit einer speziell präparierten dünnen Oberflächenschicht durch Elektronenstrahlbearbeitung mit einem Farbmuster in Wiederholstruktur, wie z.B. in der LCD-Technik üblich, versehen werden. Um den gewünschten optischen Effekt zu erreichen, sind jeweils vier in einer orthogonalen Matrix angeordnete Pixel mit unterschiedlichen Energiedichten zu beaufschlagen. Bei der Bearbeitung bewirkt ein thermischer Effekt, daß die dünne präparierte Oberflächenschicht in den Bereichen der Pixel zeitgleiche, in der Maximaltemperatur aber verschiedene Temperaturzyklen durchläuft, um pixelweise bestimmte optische Eigenschaften zu erhalten.

Mit dem Verfahren gemäß Patentanmeldung 196 42 116.0 werden erstmals die Grenzen der bekannten Verfahren zur Energieübertragung mit Elektronenstrahlen zur Materialbearbeitung überwunden. Es wird möglich, Strukturelemente wie auch kleinste Flächenbereiche, z. B. Pixel, in bestimmter Anordnung auf der Oberfläche definiert mit dem Elektronenstrahl zu beaufschlagen, um in diesem Bereich bestimmte Bearbeitungseffekte zu erzielen.
Es ist die Aufgabe der Erfindung, einen optischen Schalter vorzuschlagen, der im Vergleich zu den bekannten konstruktiven Lösungen einen vereinfachten Aufbau aufweist, bei dem eine hohe Lichtausbeute und eine geringe Parallaxe gegeben ist. Der optische Schalter soll als unmittelbare Folge der erfindungsgemäßen Lösung relativ unempfindlich gegen Temperatureinwirkungen sein. Wie schon gesagt, stellt das "Verfahren zur strukturierten Energieübertragung mit Elektronenstrahlen" gemäß Patentanmeldung DE 196 42 116.0 auf seinem Anwendungsgebiet derzeit den höchsten Stand der Technik dar. Es gehört mit zu der Aufgabe der hiermit vorgelegten Patentanmeldung, spezielle Bauteile, die nach dem Verfahren gemäß DE 196 42 116.0 strukturiert wurden, entsprechend der hier vorgelegten Patentanmeldung zu verwenden.

Erfindungsgemäß wird die Aufgabe wie nachfolgend dargelegt gelöst, wobei hinsichtlich des grundlegenden erfinderischen Gedankens auf den Patentanspruch 1 verwiesen wird. Die weiteren vorteilhaften Ausgestaltungen ergeben sich aus den Patentansprüchen 2 bis 6.

Zur erfindungsgemäßen Lösung sind weitere Ausführungen erforderlich.
Die Trägerplatten des optischen Schalters, welcher im besonderen ein hochauflösendes Display darstellt, bestehen aus Glas, in das dichroitische Farbfilter eingeprägt sind. Dabei handelt es sich um Trägerplatten, die nach dem Verfahren gemäß DE 196 42 116.0 strukturiert wurden.
Für den Aufbau des optischen Schalters kann nur eine oder können alle Trägerplatten, wie noch ausgeführt wird, aus Glas bestehen, in das dichroitische Farbfilter eingeprägt sind.

Die dichroitischen Farbfilterschichten der Trägerplatten sind im allgemeinen einseitig auf den Trägerplatten angeordnet. Für spezielle Anwendungsfälle sind die dichroitischen Farbfilterschichten auf den Trägerplatten doppelseitig angeordnet.

Bei doppelseitigen dichroitischen Farbfilterschichten können gleichartige oder unterschiedliche Absorptions- und Polarisationswirkungen realisiert sein.

Die jeweiligen dichroitischen Farbfilterschichten in den Trägerplatten können monochrom (Einfarbdisplay) oder farblich strukturiert (Mehrfarbdisplay) sein.

Die dichroitischen Farbfilterschichten liegen innerhalb der Glasmatrix der Trägerplatten, und sie sind dem Herstellungsverfahren entsprechend matrixartig verteilt. Die Farbmuster weisen in diesen Fällen Wiederholstrukturen auf und ermöglichen den Aufbau eines vollfarbfähigen Displays.

Die dichroitischen Farbfilterschichten der Trägerplatten reichen beginnend von der Glasoberfläche bis in eine Tiefe von wenigen µm. Als Orientierung können hier Tiefen bis max. 10 µm genannt werden. Die Dicke der Farbzone kann hierbei auch nur wenige Zehntel µm betragen.

Die dichroitischen Farbfilter haben Farb- und Polarisationswirkungen im sichtbaren und/oder im unsichtbaren Spektralbereich (UV-, IR- Bereich).
In einer vorteilhaften Ausführung werden zur Erzielung geringer Parallaxen die strukturierten Farbfilterschichten der Trägerplatten auf der Seite angeordnet, die mit der Flüssigkristallsubstanz Kontakt hat, d.h. zur Erzielung eines möglichst geringen Abstandes der strukturierten Flächen befinden sich diese Flächen innenliegend. Hier wird im Prinzip auf bekannte Anordnungen zurückgegriffen, wobei im Unterschied zu dem bekannten Stand der Technik die nach dem Verfahren gemäß DE 196 42 116.0 strukturierten Trägerplatten verwendet werden.

Wird auf möglichst geringe Parallaxe kein Wert gelegt, können sich ein oder beide Farbfilter an den Außenseiten der Trägerplatten befinden, wie das im Prinzip bei den bekannten Strukturierungen bzw. Filteraufbauten der Fall ist.

Als ganz wesentlich ist hervorzuheben, daß die Farbmuster nach der Strukturierung der Trägerplatten, soweit sie aus Glas bestehen, bis auf ca. 550°C/600°C stabil bleiben. Andere Werkstoffe sollen hierbei durchaus nicht ausgeschlossen sein.

Wie noch darzulegen ist, sind transmissive, reflektive und transflektive Aufbauten möglich.

Die unter Verwendung der dichroitisch strukturierten Trägerplatten zu realisierenden optischen Schalter (z.B. vom LCD-Typ) zeichnen sich durch vereinfachten Aufbau aus, indem in vielen Fällen mindestens ein Polarisationsfilter wegfällt. Die Farbfilter, dichroitisch strukturiert, befinden sich in einer Schicht, bei der zusätzliche Aufwendungen in bezug auf Ausgleich der Höhe der Pixel entfallen. Die Filter zeichnen sich durch eine hohe Lichtausbeute aus, denn die dichroitischen Filter haben eine geringere Grundabsorption gegenüber konventionellen Farbfiltern.

Anhand einiger Ausführungsbeispiele soll die Erfindung weiter erläutert werden.

Die Figuren bedeuten:
Figur 1 - Transmissives Farb-LCD mit Farbmischung (Rot, Gelb, Blau; Schwarz)
Figur 2 - Transmissives Farb-LCD mit Farbmischung (Rot, Gelb, Blau; Weiß)
Figur 3 -Reflektives Farb-LCD mit Farbmischung (Rot, Gelb, Blau; Weiß)
Figur 4 - Transmissives Farb-LCD mit Farbmischung (Rot, Gelb, Blau)
Figur 5 - Transmissives Farb-LCD mit Farbmischung (Rot, Grün, Blau; Weiß)
Figur 6 - Optischer Schalter für UV-A-Licht (transmissiv, Auslöschung in schmalen Bereichen)
Figur 7 - Optischer Schalter für schmalbandiges UV-A-Licht (transmissiv)
Figur 8 - Optischer Schalter für breitbandiges UV-A-Licht (transmissiv)

Die verwendeten Positionszeichen bedeuten:
1 - Farbstrukturiertes dichroitisches Glas
2 - transparente Segmentelektroden
3 - Orientierungsschicht
4 - transparente Hauptelektrode
5 - Glasträger
6 - Frontpolarisator
7 - Polarisationsfilter
8 - einfallendes Licht
9 - austretendes Licht
10 - Flüssigkristallmoleküle
11 -Reflektor
12 -Farbstrukturiertes dichroitisches Glas
13 - dichroitisches UV-Frontglas ***(mit Polarisationswirkung im UV-Bereich)***
14 - dichroitisches UV- Glas ***(mit Polarisationswirkung im UV-Bereich)***
15 - strukturiertes UV-Frontglas ***(mit Polarisationswirkung im UV-Bereich)***
16 - strukturiertes UV-***Glas (mit Polarisationswirkung im UV-Bereich)***
dR - dichroitisches Rot
dG - dichroitisches Gelb
dB - dichroitisches Blau
R - Rot
G - Gelb
B - Blau
W- Weiß

- UV Pol 1 -: ***dichroitisches Glas (mit schmalbandiger Polarisationswirkung im UV-Bereich 1)***
- UV Pol 2 -: ***dichroitisches Glas (mit schmalbandiger Polarisationswirkung im UV-Bereich 2)***
- UV Pol 3 -: ***dichroitisches Glas (mit schmalbandiger Polarisationswirkung im UV-Bereich 3)***
- λ 1, λ 2, λ3 -: austretendes UV-A-Licht unterschiedlicher Wellenlänge

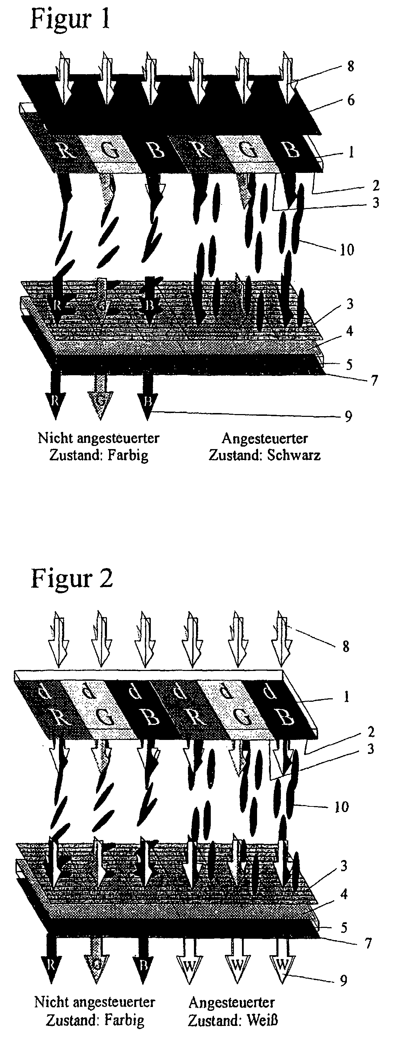

Das transmissive Farb-LCD mit Farbmischung gemäß Figur 1 besteht aus einem farbstrukturierten dichroitischen ***Glas*** 1. Die optisch aktive Schicht ist einseitig und innenliegend angeordnet. Diese Schicht wurde nach dem vorher in der Beschreibung genannten Verfahren zur strukturierten Energieübertragung mit Elektronenstrahlen hergestellt, wobei das ***Glas*** dichroistisches Rot dR, dichroistisches Gelb dG, dichroistisches Blau dB aufweist. Am ***farbstrukturierten dichroitischen Glas*** 1 befinden sich innenliegend transparente Segmentelektroden 2 und die erste Orientierungsschicht 3. Auf einem zweiten Glasträger (mit dem Positionszeichen 5 versehen) sind innenliegend eine transparente Hauptelektrode 4 und auch eine zweite Orientierungsschicht 3 (90°zur ersten gedreht) angeordnet. Unterhalb vom Glasträger 5 ist (außenliegend) ein Polarisationsfilter 7 und oberhalb vom farbstrukturierten dichroitischen ***Glas 1*** (ebenfalls außenliegend) ist ein Frontpolarisator 6 plaziert. Die beiden Polarisationsfilter sind 90° zueinander verdreht angeordnet.

Das einfallende unpolarisierte Licht 8 tritt durch den Frontpolarisator 6, wird linear polarisiert; tritt durch das farbstrukturierte dichroitische ***Glas*** 1, in dem eine Absorption in schmalen Wellenlängenbereichen erfolgt, dann durch die Flüssigkristallschicht, in der es bei nicht angelegter Spannung (d.h. im nicht angesteuerten Zustand) in seiner Polarisarionsrichtung um 90° gedreht wird, durch den Glasträger 5 mit Polarisationsfilter 7. Auf Grund der Orientierung des Polarisationsfilters 7 findet keine Absorption statt. Aus dem Polarisationsfilter 7 tritt Licht 9 mit den Bestandteilen Rot, Gelb, Blau.

Im angesteuerten Zustand erfolgt eine Ausrichtung der Flüssigkristallmoleküle in Feldrichtung, die Polarisationsrichtung des Lichtes wird nicht mehr gedreht. Das Licht wird im Polarisationsfilter 7 vollständig (in allen Wellenlängenbereichen des sichtbaren Spektrums) absorbiert, die angesteuerten Segmente erscheinen schwarz.

Gemäß Figur 2 durchdringt das einfallende Licht 8 (unpolarisiert) das farbstrukturierte dichroitische ***Glas*** 1 unmittelbar. Die eine Komponente des elektrischen Feldvektors bleibt nahezu unbeeinflußt, während in der zweiten, um 90° gedrehten, eine Absorption in schmalen Wellenlängenbereichen stattfindet. Man erhält nach Verlassen des farbstrukturierten dichroitischen ***Glases*** 1 weißes Licht (in einer Polarisationsebene) mit den Farbanteilen Rot, Gelb, Blau (in der um 90° zur ersten gedrehten Polarisationsebene). Ein Frontpolarisator entfällt.
Im nicht angesteuerten Zustand erfolgt eine Drehung der Polarisationsrichtung um 90°. Dieses Licht hat nach dem Durchtritt durch das Polarisationsfilter 7 (das so orientiert ist, daß es die weiße Komponente vollständig absorbiert, die um 90° gedrehte farbige Komponente nahezu ungeschwächt hindurchläßt) nur noch die Farbanteile Rot, Gelb, Blau und ist linear polarisiert.
Im angesteuerten Zustand findet keine Drehung der Polarisationsrichtung des Lichtes statt, so daß die farbige Komponente durch das Polarisationsfilter 7 absorbiert wird und die um 90° gedrehte weiße Komponente hindurchtreten kann. Das austretende Licht ist weiß und linear polarisiert (siehe Bezugszeichen 9 in Figur 2).

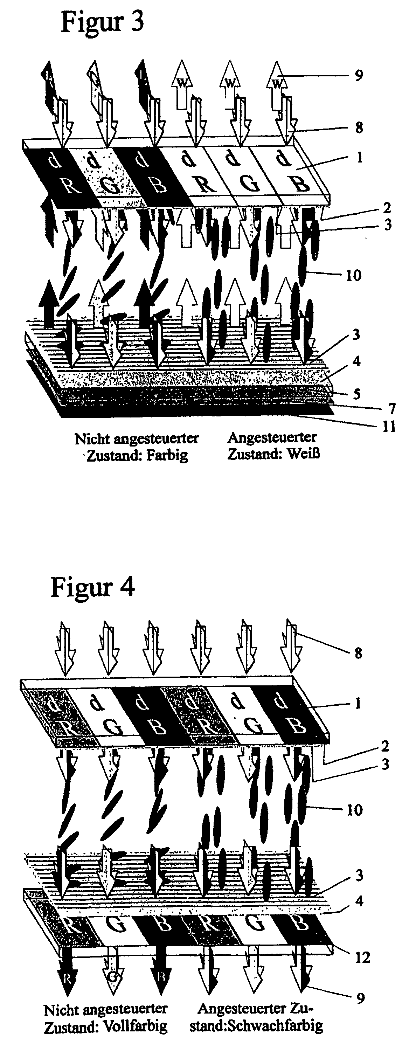

Figur 3 zeigt den Aufbau eines reflektiven Farb-LCD mit Farbmischung, wobei sich außen am Polarisationsfilter 7 (Rückseitenpolarisator) ein Reflektor 11 befindet. Bezüglich der Absorption und der Farbmischung treten die gleichen Wirkungen ein, wie sie sich aus Figur 2 ergeben. Lediglich der Reflektor 11 als zusätzliches Bauelement veranlaßt die Reflexion des Lichtes, wenn es aus dem Polarisationsfilter 7 tritt.

Die optisch aktiven Schichten sind in Figur 2 und Figur 3, ebenfalls wie bei Figur 1, einseitig und innenliegend angeordnet.

Im Vergleich zu den Figuren 1, 2 und 3 weist Figur 4 eine Veränderung auf: Farbstrukturierte dichroitische **Gläser** (1), (12) sind hier auf beiden Seiten der Flüssigkristallschicht angeordnet (optisch aktive Schichten innenliegend, d.h. auf der Seite, die sich in Kontakt mit der Flüssigkristallsubstanz befindet). Im angesteuerten Zustand tritt aus dem ***dichroitischen* Glas** partiell linear polarisiertes weißes Licht mit Farbkomponenten in der um 90° gedrehten Polarisationsrichtung. Dieses austretende Licht (siehe Bezugszeichen 9 - austretendes Licht) wird von einem. Betrachter als schwach farbig empfunden. Im nicht angesteuerten Zustand ist das austretende Licht vollfarbig und unpolarisiert.

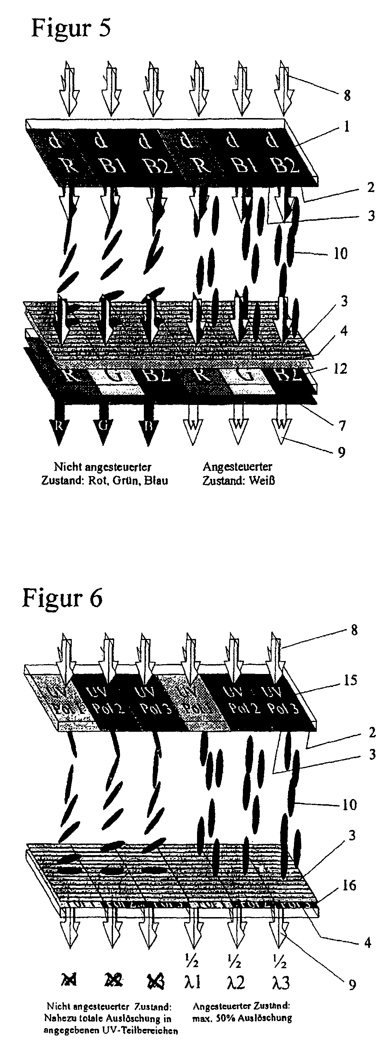

In Figur 5 weist das **farbstrukturierte dichroitische Glas** 1 gegenüber Figur 4 die Farbfolge rot, blau 1, blau 2 auf, während das farbstrukturierte **dichroitische Glas** 12 die Farbfolge rot, gelb, blau hat. Durch Überdeckung von Blau und Gelb im Strahlengang wird Grün erzeugt. Durch den Einsatz eines Polari-sationsfilters 7 (Rückseitenpolarisator) kann zwischen den Zuständen farbig (Rot, Grün, Blau) und weiß geschaltet werden.

Mit Figur 6 wird ein optischer Schalter für UV-A-Licht (transmissiv) vorgestellt.
Das einfallende Licht 8 (UV-A-Licht, unpolarisiert) tritt durch das ***strukturierte*** dichroitische UV- ***Frontglas*** 15 ***mit Polarisationswirkung im UV- Bereich*** (mit optisch aktiver Schicht einseitig und innenliegend), weiter durch die Flüssigkristallschicht und schließlich durch ein **strukturiertes** dichroitisches UV- Glas 16, ***ebenfalls mit Polarisationswirkung im UV- Bereich.*** Beide Gläser (gemäß den Bezugszeichen 15, 16) weisen eine optisch aktive Schicht einseitig und innenliegend auf. Im angesteuerten Zustand erfolgt eine maximal 50% ige Auslöschung. Im nicht angesteuerten Zustand erfolgt eine nahezu totale Auslöschung in den angegebenen UV-Wellenlängenbereichen.

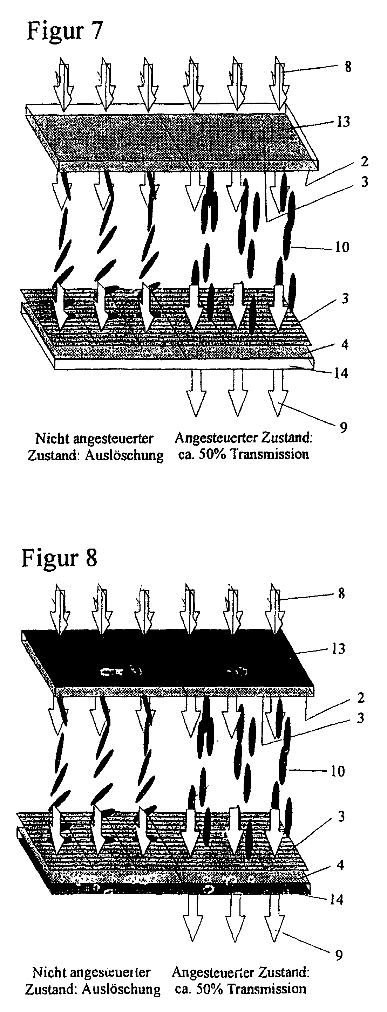

**Bei den nachfolgend erläuterten Figuren 7 und 8 handelt es sich um ergänzende Ausführungsbeispiele, die nicht Gegenstand des Schutzbegehrens sind.**

Entsprechend Figur 7 wird ein optischer Schalter für schmalbandiges UV-A-Licht dargestellt, welches unpolarisiert ist. Das einfallende Licht 8 tritt durch das dichroitische UV-Glas 13 *(mit* schmalbandiger ***Polarisationswirkung im UV- Bereich***) mit optisch aktiver Schicht einseitig und innenliegend.
Das dichroitische UV-Glas 14 ***(mit Polarisationswirkung im UV-Bereich)*** ist mit einer optisch aktiven Schicht versehen, die einseitig und innenliegend angeordnet ist. Im nicht angesteuerten Zustand erfolgt eine vollständige Auslöschung, während im angesteuerten Zustand UV-A-Licht 9 austritt, das linear polarisiert ist. Die Transmission des Lichtes beträgt im angesteuerten Zustand ca. 50 %.

Mit Figur 8 wird ein optischer Schalter für breitbandiges UV-A-Licht vorgestellt, welcher im Vergleich zu Figur 6 in seinem Aufbau dahingehend abweicht, daß das dichroitische UV ***Frontglas*** 13 optisch aktive Schichten beidseitig, aber ***mit spektral unterschiedlichen Polarisationswirkungen im UV-Bereich*** aufweist (Vergrößerung der Breitbandigkeit). Das dichroitische UV- Glas 14 besitzt ebenfalls optisch aktive Schichten beidseitig mit spektral unterschiedlichen ***Polarisationswirkungen im UV-Bereich***. Wie bei Figur 6 findet im nicht angesteuerten Zustand eine Auslöschung statt, während im angesteuerten Zustand das anstrebende UV-A-Licht linear polarisiert ist, wobei die Transmission ca. 50 % beträgt.

## Patentansprüche

1. Optischer Schalter, der aus zwei Trägerplatten aufgebaut ist, die aus Glas bestehen, zwischen den Trägerplatten eine Flüssigkristallsubstanz befindlich ist, die Trägerplatten mit durchsichtigen Elektroden versehen sind, die Trägerplatten Polarisationsfilter aufweisen, **dadurch gekennzeichnet, daß** mindestens eine der Trägerplatten aus farbstrukturiertem dichroitischem Glas (1) besteht, in das dichroitische Filter eingeprägt sind, die als Farb- und Polarisationsfilter wirken, innerhalb der Glasmatrix liegen und von der Oberfläche der Trägerplatte bis in eine Tiefe von maximal 10 µm reichen.

2. Optischer Schalter nach Anspruch 1 **dadurch gekennzeichnet, daß** die Trägerplatten aus Flachglas bestehen.

3. Optischer Schalter nach Anspruch 1 **dadurch gekennzeichnet, daß** mindestens bei einer Trägerplatte auf beiden Seiten dichroistische Farbfilter eingeprägt sind.

4. Optischer Schalter nach Anspruch 1 und 3 **dadurch gekennzeichnet, daß** in mindestens eine der Trägerplatten eine monochrome Farbfilterschicht eingeprägt ist.

5. Optischer Schalter nach Anspruch 1, 3, 4 **dadurch gekennzeichnet, daß** die Farbfilterschicht mindestens einer Trägerplatte auf der Seite angeordnet ist, die mit der Flüssigkristallsubstanz Kontakt hat.

6. Optischer Schalter nach Anspruch 1 bis 5, **dadurch gekennzeichnet, daß** der optische Schalter nicht mehr als einen an der äußeren Seite einer Trägerplatte angeordneten Polarisationsfilter aufweist.

## Claims

1. Optical switch consisting of two support plates made of glass between which a liquid crystal substance is situated, with said support plates being equipped with transparent electrodes and polarisation filters, **characterized in that** at least one of the support plates consists of colour-structured dichroic glass into which are impressed said dichroic filters that act as combined colour and polarisation filters being situated inside a glass matrix and extending from the support plate's surface down to a depth of 10 µm maximum.

2. Optical switch according to claim no. 1 **characterized in that** the support plates are made of plate glass.

3. Optical switch according to claim no. 1 **characterized in that** at: least one of the support plates has dichroic colour filters impressed on both sides.

4. Optical switch according to claims no. 1 and 3 **characterized in that** at least one of the support plates has an impressed monochrome colour filter layer.

5. Optical switch according to claims no. 1, 3 and 4 **characterized in that** the colour filter layer of at least one support plate is arranged on that side that is in contact with the liquid crystal substance.

6. Optical switch according to claims no. 1 to 5 **characterized in that** the optical switch itself has not more than just one polarisation filter arranged on the outer surface of one of the support plates.

## Revendications

1. Commutateur optique, constitué de deux plaques porteuses, qui sont en verre, entre les plaques porteuses se trouve une substance en cristal liquide, les plaques porteuses étant dotées d'électrodes transparentes, les plaques porteuses présentent des filtres de polarisation, **caractérisé par le fait qu'**au moins une des plaques porteuses est en verre dichroïque structuré en couleur, dans lequel sont incrustés des filtres dichroïques qui agissent comme filtres de couleur et de polarisation, qui se trouvent à l'intérieur de la matrice de verre et vont de la surface de la plaque porteuse jusqu'à une profondeur de 10µm au maximum.

2. Commutateur optique selon la revendication 1 **caractérisé par le fait que** les plaques porteuses sont en verre plat.

3. Commutateur optique selon la revendication 1 **caractérisé par le fait que** sur au moins une des plaques porteuses des filtres dichroïques de couleur sont incrustés sur les deux côtés.

4. Commutateur optique selon les revendications 1 et 3 **caractérisé par le fait que** sur au moins une des plaques porteuses est incrustée une couche monochrome de filtre de couleur.

5. Commutateur optique selon les revendications 1, 3 et 4 **caractérisé par le fait que** sur au moins une des plaques porteuses la couche filtrante de couleur se trouve sur le côté en contact avec la substance en cristal liquide.

6. Commutateur optique selon les revendications de 1 à 5 **caractérisé par le fait que** le commutateur optique ne présente pas plus qu'un filtre de polarisation sur le côté extérieur d'une plaque porteuse.
